# EUROPEAN PATENT APPLICATION

(11) **EP 0 775 560 A2**
(43) Date of publication of application: **28.05.1997**
(21) Application number: 96118540.2
(22) Date of filing: 19.11.1996
(51) Int. Cl.: B27G 15/00

(54) **Wood working drill bit**

(30) Priority: 24.11.1995 JP 305916/95
(71) Applicant: Kanefusa Corporation, Niwa-gun, Aichi-ken (JP)
(72) Inventor: Mantani, Tetsuro, Niwa-gun, Aichi-ken (JP)
(74) Representative: Blumbach, Kramer & Partner

(57) **Abstract**

A wood working drill bit (D1, D2, D3 or D4) has two or three flutes (2) for ejecting the cutting chips. The flutes (2) are formed in a cylindrical body (1) in equally spaced relationship with each other in the circumferential direction of the body (1) so as to form cutting portions (3) between each other. The cutting portions (3) are equal in number to the flutes (2). Faces (4) of bottom edges (9) are defined by the forward ends of the bottoms of the corresponding flutes (2) on the side of the rotational direction. Recesses (5, 6) each having a substantially V-shaped configuration in section are formed in the frontmost ends of the cutting portions (3), respectively. Arc scoring edges (7, 8) extend like arcuate lines and are formed at the positions where one bottom surfaces (5a, 6a) of the recesses (5, 6) intersect the outer peripheries of the corresponding cutting portions (3), respectively. The bottom edges (9) are formed at the positions where the other bottom surfaces (5b, 6b) of the recesses (5, 6) intersect the corresponding faces (4), respectively, so that each of the bottom edges (9) extends from substantially the outer periphery of the corresponding cutting portion (3) to the central axis of the drill bit. Each of the bottom edges (9) forms a part of a central chisel (10) which has a pointed end (11) positioned forwardly beyond the peak points of the arc scoring edges (7, 8).

## Description

The present invention relates to a wood working drill bit for boring wood or wood-like material, plastic or plastic-like material or any other materials similar to these materials.

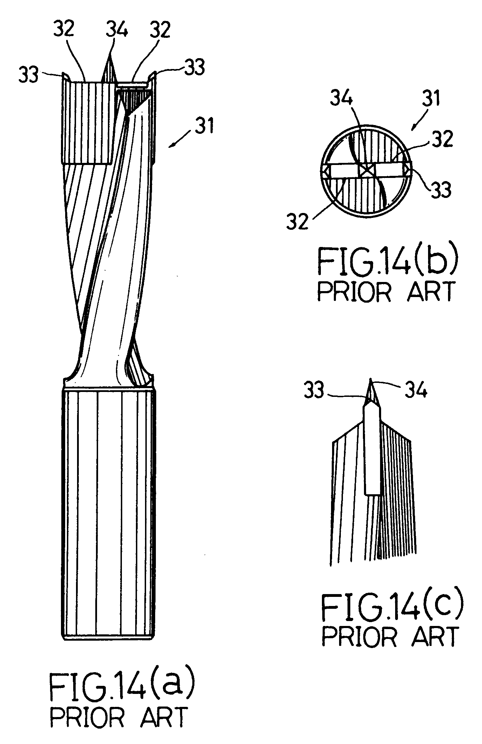

Conventional wood working drill bits used in the past include two types of drill bits, one having a single cutting edge and the other having two cutting edges. In addition, they may have scoring edges or not. In general, drill bits of the type having two cutting edges as well as drill bits of the type having scoring edges may form bores having openings which are more excellent in quality than those formed by the drill bits of the other type. For this reason, a wood working drill bit 31 of the type having two cutting edges as shown in FIGS. 14(a), 14(b) and 14(c) is generally used. The drill bit 31 has a frontmost part including a pair of bottom edges 32 extending perpendicular to the longitudinal axis of the drill bit 31, a pair of scoring edges 33 extending forwardly from the bottom edges 32 and each having a pointed end with an acute pointed angle, and a guide chisel 34 positioned on the rotational axis of the drill bit 31 and having a pointed end extending forwardly beyond the pointed ends of the scoring edges 33.

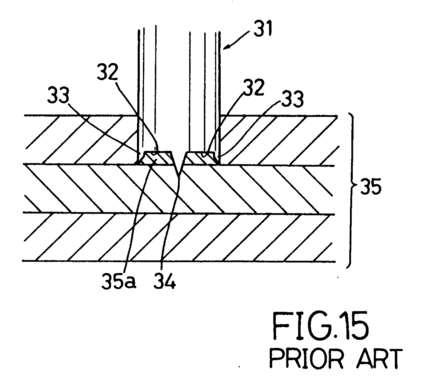

However, with this conventional drill bit 31, since each of the pointed scoring edges 33 is formed by an outer circumferential surface of the drill bit 31 and a plurality of other surfaces, the scoring edges 33 are difficult to be formed. In addition, due to such a pointed configuration, the life of the scoring edges 33 is shorter than that of the bottom edges 32, and the scoring edges 33 are liable to be damaged when they are accidentally brought to abut on an object or the like or when they are brought to abut on foreign materials contained in a work during a boring operation. Further, when the drill bit 31 is adapted to bore a laminated board 35 as shown in FIG. 15, a ring part 35a is cut out from one layer of the laminated board 35 by the scoring edges 33 while the ring part 35a being penetrated by the guide chisel 34, so that the ring part 35a may frequently be caught by the frontmost part of the drill bit 31 immediately before the drill bit 31 is advanced to bore the next layer of the laminated board. When this occurs, the ring part 35a rotates with the drill bit 31, so that the drill bit 31 may not bore into the next layer of the laminated board and that a further boring operation cannot be performed.

It is, accordingly, an object of the present invention to provide a wood working drill bit having scoring edges and bottom edges which can be easily formed while the scoring edges being excellent in cutting ability and durability.

According to claim 1 of the present invention, there is provided a wood working drill bit in which two or three flutes for ejecting the cutting chips are formed in a cylindrical body in equally spaced relationship with each other in the circumferential direction of the body so as to form cutting portions between each other, the cutting portions are equal in number to the flutes, and faces of bottom edges are defined by the forward ends of the bottoms of the corresponding flutes on the side of the rotational direction, characterized in that:
recesses each having a substantially V-shaped configuration in section are formed in the frontmost ends of the cutting portions, respectively;
arc scoring edges extending like arcuate lines are formed at the positions where one bottom surfaces of the recesses intersect the outer peripheries of the corresponding cutting portions, respectively;
the bottom edges are formed at the positions where the other bottom surfaces of the recesses intersect the corresponding faces, respectively, so that each of the bottom edges extends from substantially the outer periphery of the corresponding cutting portion to the central axis of the drill bit; and
each of the bottom edges forms a part of a central chisel which has a pointed end positioned forwardly beyond the peak points of the arc scoring edges.

Thus, with this construction, the arc scoring edges formed at the frontmost ends of the cutting portions extend like arcuate lines, and one bottom surface of each recess defining the corresponding arc scoring edge is inclined at predetermined angle, so that the width of each of the arc scoring edges in the direction perpendicular to the rotational direction of the body is small while the length of each of the arc scoring edges in the rotational direction is great. The arc scoring edges therefore do not have acute pointed ends, so that the arc scoring edges may not be easily damaged while they are improved in their cutting ability and durability. Preferably, thinning parts are formed at the pointed end of the central chisel for reducing the thrust resistance.

In addition, the arc scoring edges and the bottom edges can be very easily formed by simply forming the recesses in the cutting portions.

According to claim 2, there is provided a wood working drill bit in which two or three flutes for ejecting the cutting chips are formed in a cylindrical body in equally spaced relationship with each other in the circumferential direction of the body so as to form cutting portions between each other, the cutting portions are equal in number to the flutes, and faces of bottom edges are defined by the forward ends of the bottoms of the corresponding flutes on the side of the rotational direction, characterized in that:
recesses each having a substantially V-shaped configuration in section are formed in the frontmost ends of the cutting portions, respectively;
arc scoring edges 7 extending like arcuate lines are formed at the positions where one bottom surfaces of the recesses intersect the outer peripheries of the corresponding cutting portions, respectively;
the bottom edges are formed at the positions where the other bottom surfaces of the recesses intersect the corresponding faces, respectively, so that each of the bottom edges extends from substantially the outer periphery of the corresponding cutting portion to a position adjacent the central axis of the drill bit; and
a guide chisel part positioned on the central axis of the drill bit is formed in continuity with the bottom edges and extends forwardly therefrom, so that a pointed end of the guide chisel is positioned forwardly beyond the peak points of the arc scoring edges.

With this construction, although the machining operation of the frontmost end of the drill bit may be complicated in comparison with the machining operation required for the drill bit of claim 1 because of the provision of the guide chisel part, the operation is still easily performed in comparison with the operation required for the conventional drill bit. In particular, by virtue of the provision of the acutely extending guide chisel part, the drill bit may be improved in its straightly advancing ability, and therefore, the drill bit is suitable to bore a work such as coniferous-leaf trees having annual rings and having alternate soft and hard layers.

According to claim 3, the peak points of the arc scoring edges are positioned forwardly of a base of the guide chisel part.

According to claim 4, the base of the guide chisel part and the peak points of the arc scoring edges are positioned at substantially the same position in the axial direction of the body.

Thus, with the construction of claims 3 and 4, the arc scoring edges may precede the bottom edges or may advance simultaneously therewith when a work is bored. Therefore, even if fibers of the work are of a long-length type and the work has a relatively greater rigidness, a hole bored by the drill bit may have an opening which has a clean and smooth peripheral edge formed by the arc scoring edges. Additionally, the positioning of the base at substantially the same level as the peak points of the arc scoring edges is particularly advantageous when the work to be bored is a laminated board.

According to claim 5, a part of each cutting portion positioned rearwardly in the rotational direction of the peak point of the corresponding arc scoring edge is partly or entirely cut off.

With this construction, a frictional contacting area is reduced between a work to be bored and the outer surfaces of the cutting portions which form the arc scoring edges. Therefore, the heat which may be accumulated at the arc scoring edges is reduced, so that the arc scoring edges may be prevented from being softened and that the work is prevented from scorching.

The invention will become more apparent from the following description given by way of example only with reference to the drawings.
FIG. 1 is a side view of a wood working drill bit according to a first embodiment of the present invention;
FIG. 2 is a front view of a frontmost end of the drill bit shown in FIG. 1;
FIG. 3 is a different side view, as viewed from the side of one of cutting portions, of the frontmost end of the drill bit;
FIG. 4 is a sectional view taken along line IV-IV in FIG. 2;
FIG. 5 is an explanatory view showing the operation for forming the frontmost end of the drill bit by means of a grinding wheel;
FIG. 6 is an explanatory view as viewed from a different direction from FIG. 5;
FIG. 7(a) is a side view of a frontmost part of a wood working drill bit according to a modification of the first embodiment;
FIG. 7(b) is a front view of FIG. 7(a);
FIG. 7(c) is a side view, as viewed from the side of one of cutting portions, of the frontmost part of the drill bit;
FIG. 8(a) is a side view of a frontmost part of a wood working drill bit according to a second modification of the first embodiment;
FIG. 8(b) is a front view of FIG. 8(a);
FIG. 9 is a side view of a frontmost part of a wood working drill bit according to a second embodiment of the present invention;
FIG. 10 is a front view of FIG. 9;
FIG. 11 is a side view, as viewed from the side of one of cutting portions, of the frontmost part of the drill bit;
FIG. 12 is an explanatory view showing the boring operation in case that bottom edges precede arc scoring edges;
FIG. 13(a) is a side view of a frontmost part of a wood working drill bit according to a modification of the second embodiment;
FIG. 13(b) is a front view of FIG. 13(a);
FIG. 14(a) is a side view of a conventional wood working drill bit;
FIG. 14(b) is a front view of FIG. 14(a);
FIG. 14(c) is a side view, as viewed from the side of one of cutting portions, of the frontmost part of the drill bit; and
FIG. 15 is an explanatory view showing the boring operation of a laminated plate by the conventional wood working drill bit.

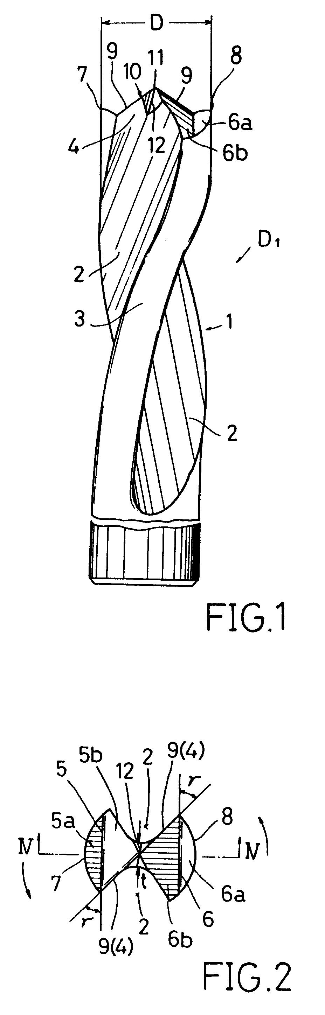

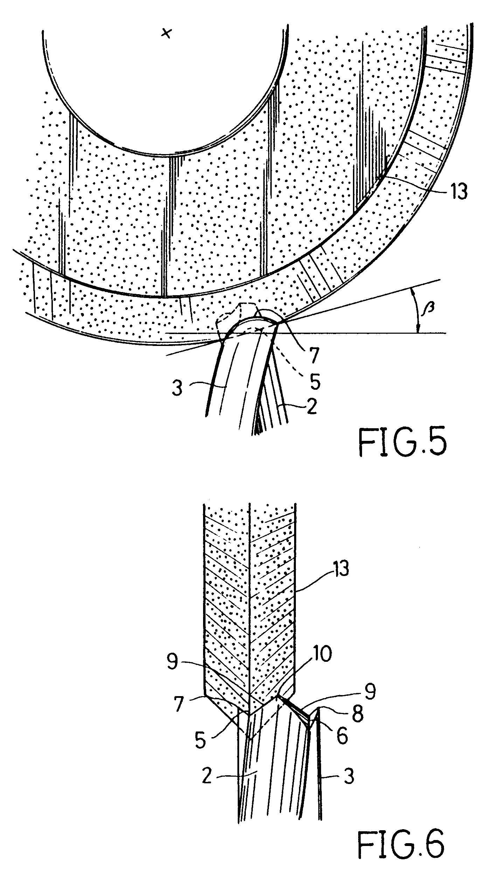

A first embodiment of the present invention will now be explained with reference to FIGS. 1 to 6.

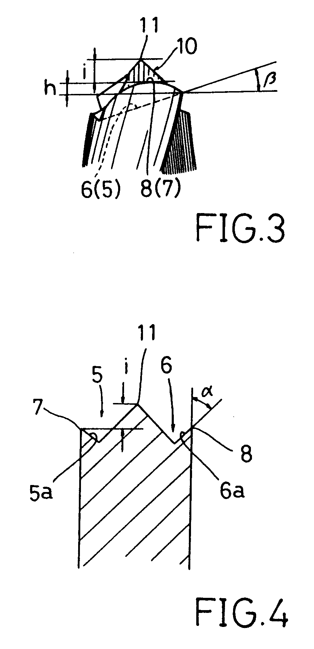

A wood working drill bit D1 is shown in FIG. 1 in side view. The frontmost end of the drill bit D1 is shown in FIG. 2 in front view and is shown in FIG. 3 in side view as viewed from one cutting portion. A sectional view taken along line IV-IV in FIG. 2 is shown in FIG. 4. The drill bit D1 includes a cylindrical body 1 having a diameter D. Two diametrically opposing flutes 2 are formed in an outer peripheral surface of the cylindrical body 1 for ejecting cutting chips and have a predetermined helix angle (right-hand helix), so that a pair of cutting portions 3 are formed and are connected to each other at the frontmost end of the body 1. A face 4 is defined by a front part of a bottom surface of each flute 2 on one side of the corresponding cutting portion 3 in the rotational direction of the drill bit D1.

In addition, as shown in FIG. 2, V-shaped recesses 5 and 6 each having a V-shaped configuration in section are formed at the frontmost ends of the cutting portions 3, respectively. On the outer periphery of the body 1, a bottom line of each of the V-shaped recesses 5 and 6 intersects a front edge line of the corresponding face 4 at an angle of γ as viewed in the axial direction of the drill bit D1. On the other hand, as shown in FIG. 3, the bottom line of each of the V-shaped recesses 5 and 6 is inclined axially forwardly (upwardly as viewed in FIG. 3) in the rotational direction of the drill bit D1 and intersects the line perpendicular to the axis of the body 1 at an angle of β. Arc scoring edges 7 and 8 each having a substantially arcuate configuration are formed at positions where one bottom surfaces 5a and 6a on the outer side of the V-shaped recesses 5 and 6 intersect the outer peripheral surfaces of the corresponding cutting portions 3 at an angle of α, respectively. Each of the arc scoring edges 7 and 8 has a height h which is the distance measured from one end in the rotational direction to a peak point in the axial direction. Each of the other bottom surfaces 5b and 6b of the V-shaped recesses 5 and 6 is inclined at a predetermined angle in the axial direction and intersect the corresponding face 4 to form a bottom edge 9 extending from the periphery of the corresponding cutting portion 3 to a position adjacent the central axis of the drill bit D1. A central connecting section between the bottom surfaces 5b and 6b has a width t prior to forming thinning parts 12, and the central connecting section is formed with a central chisel 10 having a pointed end 11 which extends forwardly beyond the peak points of the scoring edges 7 and 8 by a distance i as shown in FIG. 4. The thinning parts 12 are formed on both sides of the pointed end 11 in the widthwise direction of the central connecting section, so that the pointed end 11 has a width of substantially zero.

As described above, with the drill bit D1 of this embodiment, a pair of flutes 2 for ejecting the cutting chips are formed in the body 1 and are equally spaced from each other in the circumferential direction of the body 1 so as to form a pair of cutting portions 3, and the face 4 of each bottom edge 9 is defined by the front end of the bottom of the corresponding flute 2 on the side of the rotational direction indicated by arrows in FIG. 2. The V-shaped recesses 5 and 6 each having a substantially V-shaped configuration in section are formed in the frontmost ends of the cutting portions 3 The arc scoring edges 7 and 8 extending like arcuate lines are formed at the positions where the bottom surfaces 5a and 6a of the V-shaped recesses 5 and 6 intersect the outer peripheries of the corresponding cutting portions 3. The bottom edges 9 are formed at the positions where the other bottom surfaces 5b and 6b of the V-shaped recesses 5 and 6 intersect the corresponding faces 4, so that each of the bottom edges 9 extends from the outer periphery of the corresponding cutting portion 3 to a position adjacent the central axis of the drill bit D1. Each of the bottom edges 9 forms a part of the central chisel 10 which has the pointed end 11 positioned forwardly beyond the peak points of the arc scoring edges 7 and 8. Thus, with this embodiment, the arc scoring edges 7 and 8 formed at the frontmost end of the drill bit D1 extend like arcuate lines, and the bottom surfaces 5a and 6a defining the arc scoring edges 7 and 8 are inclined at the angle of α, respectively. Therefore, each of the arc scoring edges 7 and 8 defined by the corresponding bottom surfaces 5a and 5b and the outer surfaces of the corresponding cutting portions 3, respectively, is formed by a part of the body 1 which has a thin thickness in the direction perpendicular to the rotational direction but has a great thickness in the rotational direction. In addition, the arc scoring edges 7 and 8 have no pointed point. The drill bit D1 is therefore improved in its cutting ability and durability and may not be easily damaged. Further, the pointed end 11 of the central chisel 10 is not formed to have an acute angle, so that the central chisel 10 may not be easily damaged. The thinning parts 12 on both sides of the pointed end 11 may reduce the thrust resistance during the boring operation. Additionally, since the V-shaped recesses 5 and 6 are formed at the frontmost ends of the cutting portions 3 such that their bottom lines intersect the corresponding faces 4 by the angle of γ, the arc scoring edge 7 and 8 and their corresponding bottom edges 9 can be formed by simply forming the V-shaped recesses 5 and 6 by means of a grinding wheel 13 having an outer peripheral part which is substantially V-shaped configuration in section. Thus, the operation for forming the arc scoring edges 7 and 8 and the bottom edges 9 can be easily performed.

In particular, since the central chisel 10 is formed by a part of each bottom edges 9, the operation for forming the frontmost end of the drill bit D1 can be easily performed. Further, one grinding wheel 13 can be used for forming the frontmost ends of the drill bits D1 having different diameters D, and it is not required to prepare different grinding wheels 13 for forming the drill bits having different diameters.

The angles α, β, and γ for the drill bit D1 constructed as described above are preferably determined as follows:

The angle α of the arc scoring edges 7 and 8 is preferably determined as 30 to 70°. The arc scoring edges 7 and 8 may be easily damaged when the angle α is determined to have a smaller value than this range. On the other hand, if the angle α is determined to have a greater value than this range, the parts forming the arc scoring edges 7 and 8 may have a greater thickness, so that the cutting resistance as well as the frictional heat may be increased. However, if a hard and brittle material such as a sintered diamond is used as a material of the frontmost end of the body 1, the angle α is selected to have a relatively greater value.

The angle γ of the V-shaped recesses 5 and 6 is preferably determined as 30 to 75°. If the angle γ is determined to have a smaller value than this range, the parts forming the arc scoring edges 7 and 8 may have a greater thickness, so that the cutting resistance as well as the frictional heat may be increased. If the angle γ is determined to have a greater value than this range, the arc scoring edges 7 and 8 may not have the sufficient height h.

The inclination angle β is preferably determined between 0 to 30°. If the angle β is less than 0°, a sufficient relief angle cannot be obtained at the outer ends of the bottom edges 9, so that the cutting resistance may be increased. If the angle β is determined to have a greater value than this range, the edge angle of the bottom edges 9 may become smaller, so that the bottom edges 9 may be easily damaged. In addition, the height h of the arc scoring edges 7 and 8 may be insufficient.

With regard to the height h of the arc scoring edges 7 and 8, the height h is preferably determined as 0.4 to 1.2 mm. If the height h is smaller than this range, the arc scoring edges 7 and 8 may not sufficiently perform the cleaning function of a bore to be formed. If the height h is greater than this range, the arc scoring edges 7 and 8 may bite deeper into a material to be bored than the bottom edges 9, so that a problem such as increase in the cutting resistance and increase in the frictional heat may be produced.

The height i of the pointed end 11 of the central chisel 10 relative to the peak points of the arc scoring edges 7 and 8 is preferably determined as 0.15 to 0.25D. If the height i is determined to be smaller than this range, the drill bit D1 may tend to be displaced in the radial direction when the rotating drill bit D1 is brought to abut on the material to be bored, so that the machining accuracy of the bore is degraded. If the height i is determined to be greater than this range, wooden fibers or the like which may be picked off from the material by the bottom edges 9 cannot be appropriately treated by the arc scoring edges 7 and 8, so that the function of the arc scoring edges 7 and 8 for smoothing the bore cannot be successfully performed. The thickness of the pointed end 11 of the central chisel 10 is preferably determined as 0 to 0.3 mm. If the thickness t is greater than this range, the drill bit D1 may tend to be displaced in the radial direction when the rotating drill bit D1 is brought to abut on the material to be bored, so that the machining accuracy of the bore is degraded. In addition, the thrust resistance may be increased.

The ranges of various angles and the sizes described above are those which may be expected to generally provide excellent results. However, suitable values of the angles and the sizes may be influenced by various factors such as the operational condition and may be out of these ranges in some cases.

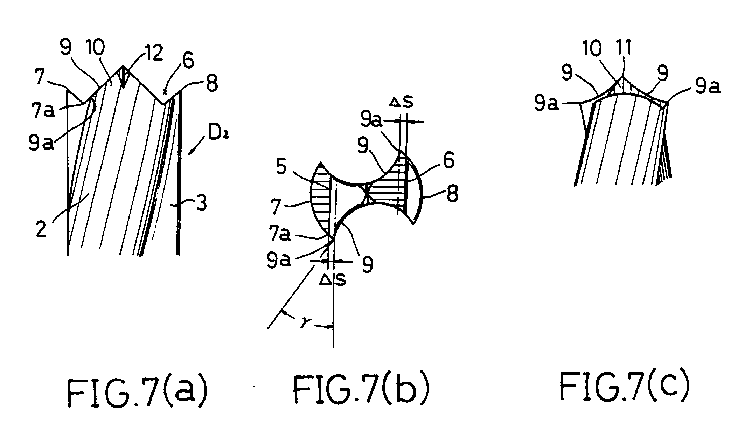

A modification of the above first embodiment is shown in FIGS. 7(a), 7(b) and 7(c). Like members are given the same reference numerals in these figures and their description will not be repeated. For a wood working drill bit D2 shown in FIGS. 7(a), 7(b) and 7(c), the position of the bottom line of each of the V-shaped recesses 5 and 6 is displaced parallelly outwardly by a distance of ΔS (see FIG. 7(b)) from the bottom line of the corresponding V-shaped recess 5 or 6 which defines the angle γ in the first embodiment, so that an outer end 9a of each bottom edge 9 is positioned forwardly in the rotational direction to some extent than one end 7a in the rotational direction of the arc scoring edge 7 or one end 8a in the rotational direction of the arc scoring edge 8.

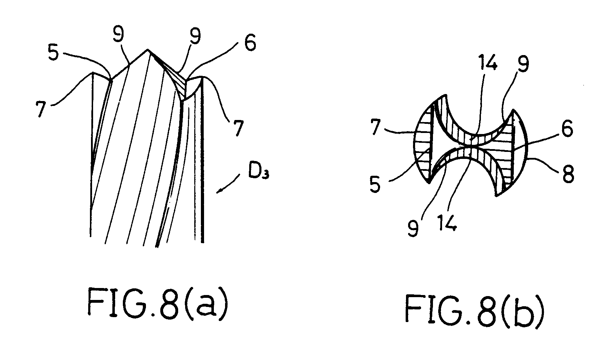

Another modification of the first embodiment is shown in FIGS. 8(a) and 8(b). A wood working drill bit D3 of this modification includes a pair of thinning portions 14 formed on both sides of the central chisel 10. The thinning portions 14 are formed by engraving the bottom of the flutes 2 such that the engraving depth gradually increases in the direction toward the frontmost end of the body 1. With the provision of these thinning parts 14, the width t at the pointed end 11 has a value of zero. This modification may provide the same function and effects as the first embodiment.

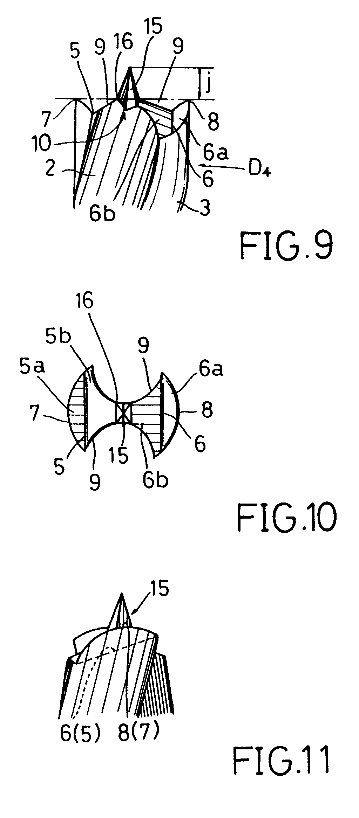

A second embodiment of the present invention will now be explained with reference to FIGS. 9, 10 and 11. A wood working drill bit D4 of the second embodiment is different from the drill bit D1 of the first embodiment in the provision of a guide chisel part 15 at a position corresponding to the pointed end 11 of the central chisel 10. Other construction is the same as the first embodiment, and therefore, like members are given the same reference numerals and their description will not be repeated. The guide chisel part 15 extends along the central axis of the drill bit D4 and is formed by a thinning operation, so that the guide chisel part 15 has a substantially pyramid-like configuration extending from the central chisel 10. The guide chisel part 15 has a base 16 positioned at substantially the same level as the level of the line connecting the peak points of the arc scoring edges 7 and 8 or below the same to some extent. Thus, the guide chisel part 15 extends forwadly beyond the peak points of the arc scoring edges 7 and 8by a height j which is preferably determined as 0.07 to 0.4 D. If the height j is smaller than this range, the guide chisel part 15 may not successfully perform its function. On the other hand, if the height j is greater than this range, the guide chisel part 15 may be easily damaged.

The thinning of the guide chisel part 15 is not necessarily required but is preferable to reduce the thrust resistance.

The drill bit D4 of this embodiment includes the guide chisel part 15 positioned on the central chisel 10, so that the drill bit D4 has the same function and effects as the drill bit D1 of the first embodiment, while the drill bit D4 is improved in its straightly advancing ability by virtue of the acutely extending guide chisel part 15. The drill bit D4 is therefore particularly suitable to bore a work such as coniferous trees having annual rings and having alternate soft and hard layers by advancing the drill bit D4 in a direction perpendicular to a cross sectional surface which intersect the annual rings of the work.

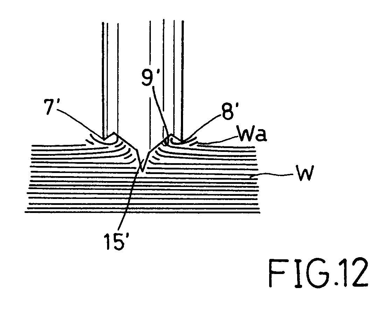

In addition, in case of a drill bit shown in FIG. 12, bottom edges 9' on the base side of a guide chisel part 15' precede scoring edges 7' and 8' when boring a work W, so that wooden fibers Wa of the work W over the area outwardly beyond the cutting diameter of the scoring edges 7' and 8' are peeled up by the bottom edges 9', so that an opening of a hole bored by this drill bit may have a peripheral edge with their fibers picked off. In contrast, with the drill bit D4 of the second embodiment, the base 16 of the guide chisel part 15 is positioned on the central chisel 10 at substantially the same level as the level of the line connecting the peak points of the arc scoring edges 7 and 8 or below the same to some extent, so that the arc scoring edges 7 and 8 may precede the bottom edges 9 or may advance simultaneously therewith when the work W is bored. Therefore, even if the fibers Wa of the work W are of a long-length type and the work W has a relatively greater rigidness, a hole bored by the drill bit D4 may have an opening which has a clean and smooth peripheral edge formed by the arc scoring edges 7 and 8. Additionally, the positioning of the base 16 at substantially the same level as the peak points of the arc scoring edges 7 and 8 is particularly advantageous when the work W to be bored is a laminated board such as the laminated board 35 described in connection with the prior art.

Further, since the drill bit D4 of this embodiment corresponds to the addition of the guide chisel part 15 to the drill bit D1 of the first embodiment, the grinding wheel 13 which includes the peripheral portion having a substantially V-shaped configuration in section as described in the first embodiment can be used for forming the V-shaped recesses 5 and 6. Thus, the arc scoring edges 7 and 8 as well as the bottom edges 9 can be formed by simply cutting the V-shaped recesses 5 and 6 by means of the grinding wheel 13 at the frontmost parts of the cutting portions 3, respectively, in the positions corresponding to each other such that the guide chisel part 15 remains in the central position. Therefore, the operation for machining the frontmost parts can be easily performed in comparison with the operation for machining the conventional drill bit. The grinding wheel 13 may be replaced by a grinding wheel including a peripheral portion which has a configuration corresponding to both the V-shaped recesses 5 and 6. If the grinding wheel 13 is usable for machining a drill bit having the diameter D which is the smallest among drill bits to be machined, the grinding wheel 13 may be used also for machining any of the drill bits other than that having the smallest diameter. This means that it is not necessary to use different grinding wheels according to change in the diameter D of the drill bit to be machined.

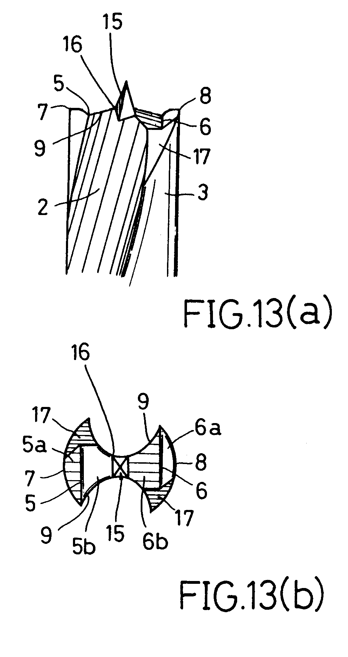

FIGS. 13(a) and 13(b) show a further modification of the drill bit D1 of the first embodiment or the drill bit D4 of the second embodiment. A drill bit of this embodiment includes inclined surfaces 17 each formed by partly or entirely cutting off a part of the corresponding cutting portion 3 positioned rearwardly in the rotational direction of the peak point of the arc scoring edge 7 or 8. The inclined surfaces 17 are inclined relative to the longitudinal axis of the drill bit by a predetermined angle. By the provision of the inclined surfaces 17 through cut-off, a reduced frictional contacting area is provided between a work to be bored and the outer surfaces of the cutting portions which form the arc scoring edges 7 and 8. Therefore, the heat which may be accumulated at the arc scoring edges 7 and 8 is reduced, so that the arc scoring edges 7 and 8 may be prevented from being softened and that the work may be prevented from scorching.

## Claims

1. A wood working drill bit (D1, D2, D3 or D4) in which two or three flutes (2) for ejecting the cutting chips are formed in a cylindrical body (1) in equally spaced relationship with each other in the circumferential direction of the body (1) so as to form cutting portions (3) between each other, the cutting portions (3) are equal in number to the flutes (2), and faces (4) of bottom edges (9) are defined by the forward ends of the bottoms of the corresponding flutes (2) on the side of the rotational direction, characterized in that:
recesses (5, 6) each having a substantially V-shaped configuration in section are formed in the frontmost ends of the cutting portions (3), respectively;
arc scoring edges (7, 8) extending like arcuate lines are formed at the positions where one bottom surfaces (5a, 6a) of the recesses (5, 6) intersect the outer peripheries of the corresponding cutting portions (3), respectively;
the bottom edges (9) are formed at the positions where the other bottom surfaces (5b, 6b) of the recesses (5, 6) intersect the corresponding faces (4), respectively, so that each of the bottom edges (9) extends from substantially the outer periphery of the corresponding cutting portion (3) to the central axis of the drill bit; and the bottom edges (9) form a part of a central chisel (10) which has a pointed end (11) positioned forwardly beyond the peak points of the arc scoring edges (7, 8).

2. A wood working drill bit (D4) in which two or three flutes (2) for ejecting the cutting chips are formed in a cylindrical body (1) in equally spaced relationship with each other in the circumferential direction of the body (1) so as to form cutting portions (3) between each other, the cutting portions (3) are equal in number to the flutes (2), and faces (4) of bottom edges (9) are defined by the forward ends of the bottoms of the corresponding flutes (2) on the side of the rotational direction, characterized in that:
recesses (5, 6) each having a substantially V-shaped configuration in section are formed in the frontmost ends of the cutting portions (3), respectively;
arc scoring edges (7, 8) extending like arcuate lines are formed at the positions where one bottom surfaces (5a, 6a) of the recesses (5, 6) intersect the outer peripheries of the corresponding cutting portions (3), respectively;
the bottom edges (9) are formed at the positions where the other bottom surfaces (5b, 6b) of the recesses (5, 6) intersect the corresponding faces (4), respectively, so that each of the bottom edges (9) extends from substantially the outer periphery of the corresponding cutting portion (3) to a position adjacent the central axis of the drill bit; and
a guide chisel part (15) positioned on the central axis of the drill bit is formed in continuity with the bottom edges (9) and extends forwardly therefrom, so that a pointed end of the guide chisel part (15) is positioned forwardly beyond the peak points of the arc scoring edges (7, 8).

3. The drill bit as defined in claim 2 wherein the peak points of the arc scoring edges (7, 8) are positioned forwardly of a base (16) of the guide chisel part (15).

4. The drill bit as defined in claim 2 wherein the base (16) of the guide chisel part (15) and the peak points of the arc scoring edges (7, 8) are positioned at substantially the same position in the axial direction of the drill bit.

5. The drill bit as defined in any one of claims 1 to 4 wherein a part of each cutting portion (3) positioned rearwardly in the rotational direction of the peak point of the corresponding arc scoring edge (7 or 8) is partly or entirely cut off.
